# EUROPEAN PATENT SPECIFICATION

(11) **EP 2 254 813 B1**
(45) Date of publication and mention of the grant of the patent: **07.09.2011**
(21) Application number: 09713290.6
(22) Date of filing: 19.02.2009
(51) Int. Cl.: B65G 17/32

(54) **TRANSPORT SYSTEM FOR BLISTER PACKAGES OR THE LIKE**
TRANSPORTSYSTEM FÜR BLISTERPACKUNGEN ODER DERGLEICHEN
SYSTÈME DE TRANSPORT POUR EMBALLAGES-COQUES OU ÉQUIVALENT

(30) Priority: 22.02.2008 US 30631
(43) Date of publication of application: 01.12.2010
(73) Proprietor: Checkpoint Systems, Inc., Thorofare, NJ 08086 (US)
(72) Inventor: BEILENHOFF, Kai, 64689 Grasellenbach (DE); SCHMID, Klaus, 68809 Neulussheim (DE); STUKE, Oliver, 69118 Heidelberg (DE)
(74) Representative: Menges, Rolf
(86) International application number: PCT/US2009/034545
(87) International publication number: WO 2009/105560

(56) References cited:
- EP-A- 0 991 038
- US-A- 3 765 566
- US-A- 3 780 909
- US-A- 3 805 996

## Description

### BACKGROUND OF THE INVENTION

### 1. FIELD OF INVENTION

The present invention relates to transport systems and, more particularly, to transport systems for blister packages or the like according to the preamble of claim 1.

### 2. DESCRIPTION OF RELATED ART

Blister packages are very popular on account of their ease of handling at the point of sale. Nearly all products are offered in such blister packages provided they are suitable in terms of their nature, size and weight. The presentation of such blister packages is effected by hanging the blister packages on supporting arms which are constructed as freely protruding booms and fitted in spaced relation in rows and columns on a perforated wall or the like. In this way, entire assortments of merchandise can be offered for sale in a relatively clearly arranged manner.

The biggest problem of such merchandise assortments offered in blister packages is that a homogenous presentation of the merchandise assortment cannot be guaranteed because of the irregular sale of individual products. The products hanging in the rear rows can no longer be well recognized when the front products are missing as the result of being sold, because they find themselves in a channel which is formed by the blister packages to the sides and cannot be looked into. The clear arrangement is lost in this case and the uniform presentation which exists when the supporting arms are fully loaded is permanently disturbed. A homogeneous presentation of the blister packages requires the blister packages hanging at the rear to be pushed to the front by sales staff from time to time in order to restore a uniform shelf profile. Because this is cumbersome and labor-intensive, a way of performing this task automatically has been long sought.

Standard blister packages are comprised of a sturdy card made of paperboard having welded to or slipped on the front a transparent blister foil. Sandwiched between the two are the products to be vended. In addition, conventional blister packages have a standardized hole, at least in Europe where it is called the "Euro hole," for suspending the package upon the supporting arm. On the same lines as this standard blister package, there are countless packaging variants in the form of bags, nets and boxes made of plastic or paperboard whose similarity is limited only to the Euro hole for suspension. But even this quasi-standardized Euro hole is designed differently by many suppliers. At the same time, there are also products which have a hole or Euro hole or the like of their own (e.g., dishwashing brushes) and therefore require no packaging at all but can still be presented suspended upon a boom. Products of such type are likewise covered by the term "blister package or the like" as herein used.

To perform the task automatically of guaranteeing a homogeneous presentation even when blister packages or the like are removed, there are two different techniques for ensuring that packages hanging at the rear are automatically transported to the free end of the supporting arm. With the first technique, each of the supporting arms is assigned one spring-loaded pusher which pushes the remaining packages as far as the limit in the delivery zone each time one of the packages hanging on the supporting arm is removed in the delivery zone by a customer. Up to now there is no really satisfactory spring system able to effect this forwarding of the products without disturbance. The known spring systems enable only the mounting of accurately coordinated packages and work without disturbance only as long as nothing changes on the packages. Furthermore, the removal of products by the customer is hardly user-friendly. The package has to be freed from the system more or less with force. Under the pressure of the spring-loaded pusher the packages tend to skew. Desirably, the customer effects the automatic forwarding of the packages himself by removing the product, but if the customer removes a package unintentionally or removes the wrong package and wants to slip it back onto the supporting arm again, then he will experience considerable problems with today's usual package transport systems.

With the second technique, it is not the customer himself who removes the front package or the like and, with the removal, effects automatically the forwarding of the packages hanging behind, but rather each supporting arm is equipped with an endless chain which is routed over two chain sprockets and has chain links each equipped with one hook element for the suspended transportation of a package or the like. One of the chain sprockets is driven by a motor. This technique, with which the forwarding of the packages is no longer effected manually by the customer but at most "by pushbutton" is used solely on automatic vending machines. Such a transport system, on which the preamble of claim 1 is based and on which furthermore the chain links are guided in a lower guide groove section of the boom or supporting arm, is known, for example, from U.S. Patent No. 3,780,909 (Callahan, et al.).

In this known transport system, the endless chain includes a plurality of rigid chain links which are connected by pins in order to define pairs of retention elements. Each pair of retention elements is formed by two adjacent chain links. The two chain links of each pair are differently constructed, namely as a so-called anvil member and as a so-called wedge member. These two members of each pair co-act together such that they releasably retain a package or the like between them.

As soon as one chain link pair reaches the turning point and moves upwards, the two chain links of the pair separate from each other and release the package or the like in question, which then leaves the chain under the action of gravity and drops normally into a merchandise chute for removal by the purchaser. After the turning point the upper chain run advances, hanging freely between the two chain sprockets, until it is deflected again at the other chain sprocket in order, at the end opposite the turning point, to re-enter the lower groove section in which the chain is linearly guided as far as the turning point at which the packages or the like are released.

Obviously, this second technique is complex and capital-intensive. It is not used therefore for transport systems which are freely accessible to the customer but in automatic merchandise vending machines or glass cases which bar the customer from direct access to the merchandise and are therefore also suitable for use in connection with high-priced products. High-priced products would include, for example, printer cartridges and printer paper, memory cards, high quality toiletries, razor blades and generally expensive brand products. Otherwise it is possible with the second technique to guarantee a trouble-free presentation and dispensing of merchandise, but it is unsuitable for presenting and dispensing mass-produced articles.

Other examples of the use of this second technique in automatic vending machines are shown in U.S. Patent Nos. 3,716,165 (Patrick); 3,756,455 (Patrick); 3,757,993 (Bruckner et al.) as well as DE 2033536 (Forrington) and EP 1081663 (Suzuki).

### BRIEF SUMMARY OF THE INVENTION

It is an object of the present invention to improve a merchandise transport system of the type initially referred to such that it enables in a simpler manner a seamless presentation, removal and returning of the merchandise.

This object is accomplished according to the invention on the basis of a transport system of the type initially referred to in that the chain is manually manipulatable by a customer and new blister packages or the like are manually advanced into the lower groove section.

The transport system according to the invention unites the functions of shelf arrangement and product presence. In addition, the transport system according to the invention unites the advantages of the two known techniques while avoiding the disadvantages of both. In the transport system of the invention, packages or the like are removed by hand while the following packages are advanced simultaneously. This is made possible by using a finite chain which obviates the need for a sprocket and is advanced one step by hand with each removal of a package while being moved one step back when packages are replenished. The transport system of the invention is therefore also independent of the construction of the hooks. It is also superfluous and undesirable to accommodate the transport system of the invention in a glass case or the like. On the contrary, it should be freely accessible for the customer and make merchandise security through presentation in glass cases superfluous. When the customer removes the front blister package or the like, through the removal he automatically effects the advancing of the packages or the like hanging behind, as the result of which a spring-loaded forwarding system as with the first known technique or a motorized drive as with the second known technique can be dispensed with. Furthermore, in the transport system according to the invention the chain can be made from identical chain links, which greatly simplifies the chain design. The arrangement is suitably selected such that the package or the like can be removed by hand, meaning that it does not drop under the effect of gravity, at the turning point when two neighboring chain links, between which there is a package or the like, move apart from each other.

The subject-matter of the claims forms advantageous embodiments of the transport system according to the invention.

If in an embodiment of the transport system according to the invention the boom has a casing which is constructed as a hollow body open in a downward direction and which is equipped on the inner side of its mutually opposite longitudinal walls with the respective guide groove, then in the presentation of merchandise only the boom with its casing, on whose lower side the blister packages or the like are visible neatly arranged one behind the other in rows, is perceivable by the eye. Not only does this result in an aesthetically attractive appearance of the transport system, but the actual chain is also placed out of reach of the customer, thus fulfilling aspects of security.

If in another embodiment of the transport system according to the invention the casing is split longitudinally, forming two shells, then the casing is easier to manufacture.

If in another embodiment of the transport system according to the invention the shells of the casing have means for a mutual plug-in connection, then the assembly of the casing and the chain in the casing is particularly easy. The two casing shells can be fixed in an accurately aligned relationship to each other by means of the plug-in connection during the assembly. The casing shells and hence the casing can be manufactured in different lengths. For this, it is possible to use a variable-length injection mold. Different lengths are dependent in this case on a technically necessary grid and are not freely selectable.

If in another embodiment of the transport system according to the invention the boom has a supporting arm mountable on a fixed structure (e.g., a wall or the like), for the casing, then the supporting arm, which can be made from steel, provides the stability of the system in a longitudinal direction and transfers the forces to the fixed structure, preferably via a mounting plate which is attached to the end of the supporting arm and with which the supporting arm is suspended, for example, on a perforated wall of a shelf. The two prior assembled casing shells can be secured together (e.g., screwed) with the supporting arm after the chain is introduced. The integrated design enables an easy adaptation of the supporting arm lengths to the different lengths of casing shells within the predetermined grid. After assembly of the two casing shells, the shells form a stable profile with mutually aligned guide grooves in which the chain is exactly aligned in the longitudinal and transverse directions.

If in another embodiment of the transport system according to the invention each chain link and its hook element are constructed as a single-piece hook, then the chain link and the hook element can be manufactured as an injection molded part particularly economically in a single operation.

If in another embodiment of the transport system according to the invention each hook has on one end a clip mounting portion adapted to be clipped into the clip mounting portions of two neighboring hooks, then the hooks can be joined very easily to form a finite hook chain on which the number of hooks correlates with the length of the two casing shells. As the result, the transport system according to the invention can be executed very easily in a grid of different lengths and according to the desired number of blister packages or the like.

If in another embodiment of the transport system according to the invention each clip mounting portion has a guide pin and, parallel and complementary thereto, a slotted bushing into which the guide pin of a neighboring hook can be clipped, then a finite hook chain can be assembled and disassembled in a simple manner without any tools and without any additional fastening elements.

If in another embodiment of the transport system according to the invention each guide pin has at either end protruding guide journals for being received in the guide groove(s), then each chain can be slidingly guided easily and jerk-free in opposed grooves in the casing shells. Conveniently, both the casing shells and the chain are made from plastic, so that suitable material combinations afford further advantages with regard to smooth running properties. In addition, the chain is secured in a simple manner against slipping out of the guide grooves.

If in another embodiment of the transport system according to the invention each hook has on the other end for forming the hook element a portion cranked on one side, then an accordingly suitable hook for each thickness of blister package or the like can be selected by selecting the length of the cranked portion. For thicker blister packages or the like it is necessary only to select a hook with a longer cranked portion.

If in another embodiment of the transport system according to the invention lateral webs are constructed on the cranked portion, then these webs serve to receive and stabilize the blister packages or the like. The lateral webs support the blister packages or the like inside the Euro hole such that the blister packages or the like always hang vertically and sideways shifting or crooked hanging of the packages is prevented. The appearance of the blister packages or the like hanging one behind the other is essentially positively influenced as the result.

If in another embodiment of the transport system according to the invention each hook has at the other end on the side opposite its cranked portion a recess for receiving the free end of the cranked portion of a neighboring hook, then each two neighboring hooks of the finite chain can combine to form a closed compartment for accommodating the upper end of a blister package or the like. This compartment remains closed during the advancing of the chain and does not open until within the deflection zone. It is thus assured that a blister package or the like can be removed from the chain only in the deflection zone. The blister packages or the like are securely held therefore by their hole or Euro hole and cannot drop accidentally out of the system. The removal of a blister package or the like is possible only within the deflection zone in which the intermeshing hook elements open. On removal of the front blister package or the like, the subsequent packages or the like are automatically pulled forward as the result of the gentle sliding of the chain. The subsequent, forward-orientated blister package or the like is then ready at the free end of the boom for the next removal. Replenishment of the transport system takes place in reverse order. During replenishment, the blister packages or the like are hung into the next possible hook elements depending on thickness. Because the chain is pushed back simultaneously, the blister packages or the like suspended upon the chain are securely held.

If in another embodiment of the transport system according to the invention the hooks are guided at an angle through the guide groove(s) and on each hook the clip mounting portions are set at a corresponding angle relative to the hook elements, then the result is a shallow and aesthetically pleasing construction of the boom even though the upper groove section and the lower groove section for guiding the finite chain are arranged one above the other.

If in another embodiment of the transport system according to the invention separate links are available which are constructed like every clip mounting portion, then neighboring hooks can be connected by links. This enables hooks with longer cranked portions required for thicker blister packages or the like to be moved without difficulty over a turning point having a small curvature radius. A chain link pitch as large as the length of the cranked portion would require a significantly greater curvature radius in the reversal area. This would result in an increased height of the two casing shells, and the looks of the transport system would be impaired. The hooks with a long cranked portion and the links can be joined together to form a finite chain just as simply as hooks without such links. The links compensate for the length difference of the cranked portions of the hooks without affecting the actual chain pitch with regard to the small curvature radius in the reversal area. The chain thus has the short pitch at the top in the guide but the long pitch in the lower region of the hooks, that is, in the region of the cranked portions of the hooks. As the turning point of the free end of the long cranked portion does not change in relation to the hook with a short cranked portion, hooks with a long cranked portion can also be deflected in the casing shells whose dimensions orientate themselves by the chain having hooks with a short cranked portion.

If in another embodiment of the transport system according to the invention each hook is equipped with at least one switching cam for actuating a motion detector or the like, then a state of motion or other states of the chain (for example, its advancing or receding motion) can be detected.

### BRIEF DESCRIPTION OF SEVERAL VIEWS OF THE DRAWINGS

The invention will be described in conjunction with the following drawings in which like reference numerals designate like elements and wherein:
- Fig. 1: is a partial side view of a preferred embodiment of a transport system according to the invention, which is intended for blister packages or the like;
- Fig. 2: shows the detail of a chain of the blister package transport system of Fig. 1 in a side view but depicting the chain inclined in relation to Fig. 1 so that guide pins of the hooks forming the chain are oriented hori- zontally;
- Fig. 3a: is a side view of a hook of the transport system of the present inven- tion;
- Fig. 3b: is an isometric view of the hook of the present invention;
- Fig. 3c: is another isometric view of the hook of the present invention taken from the opposite side of the hook shown in Fig. 3a;
- Fig. 4: shows the manner of assembling a finite chain of hooks shown in Figs. 3a-3c;
- Fig. 5: shows the assembly of a chain according to a second preferred em- bodiment of hooks and links;
- Fig. 6: is a view of the blister package transport system according to Fig. 1 showing a casing of a boom in a cross-sectional view, a hook in a front view as in Fig. 3a and a hook in a back view as in Fig. 3c;
- Fig. 7: is a view of a shell of a casing of a boom of the blister package trans- port system according to Fig.1;
- Fig. 8: is a view of a second shell of the casing which fits the shell of Fig. 7;
- Fig. 9: shows the manner of connecting the shells of Figs.8 and 9 by means of a plug-in connection;
- Fig. 10: is a view of a casing formed from the plug-connected shells of Figs. 7 and 8 together with a supporting arm of said casing; and
- Fig. 11: is a view of a third preferred embodiment of a hook which is equipped with switching cams.

### DETAILED DESCRIPTION OF THE INVENTION

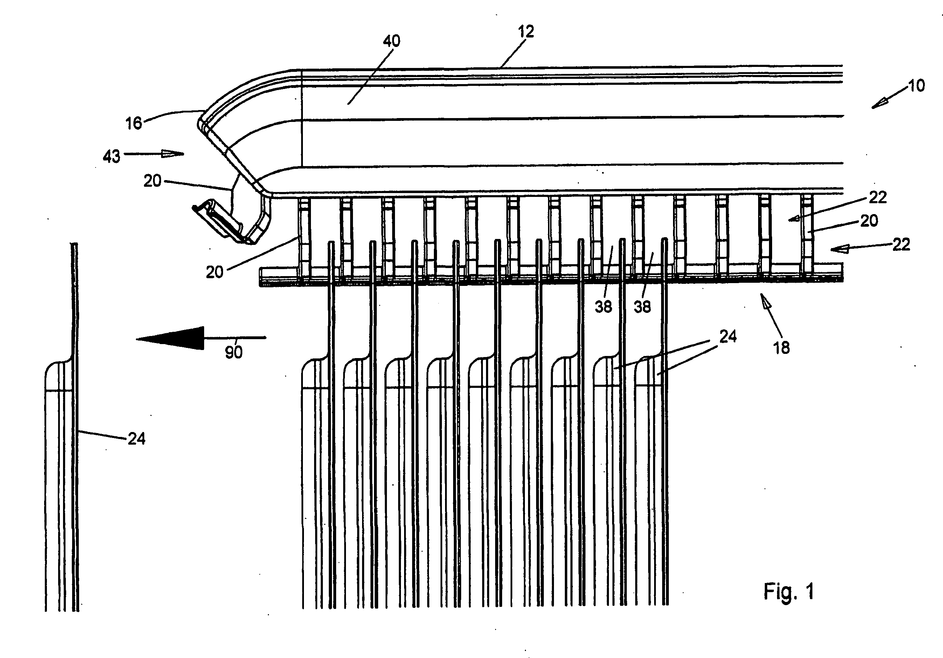

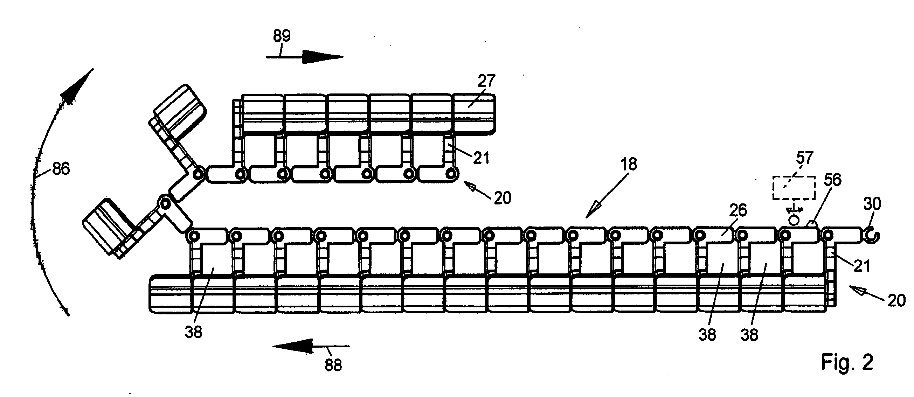

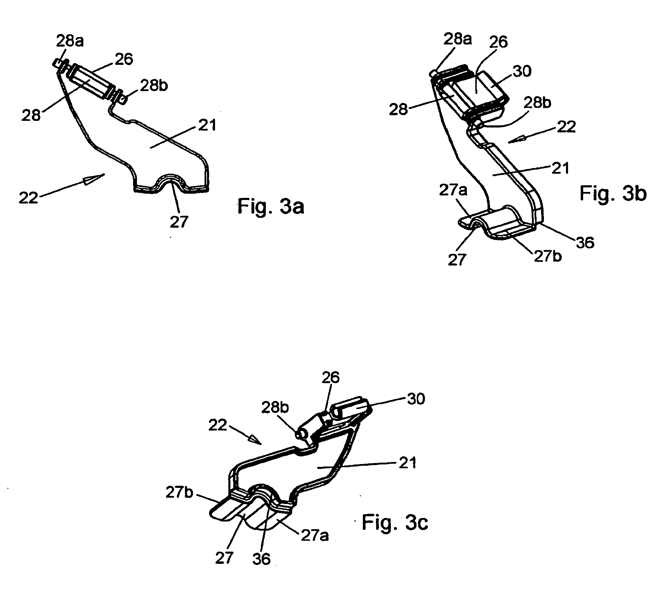

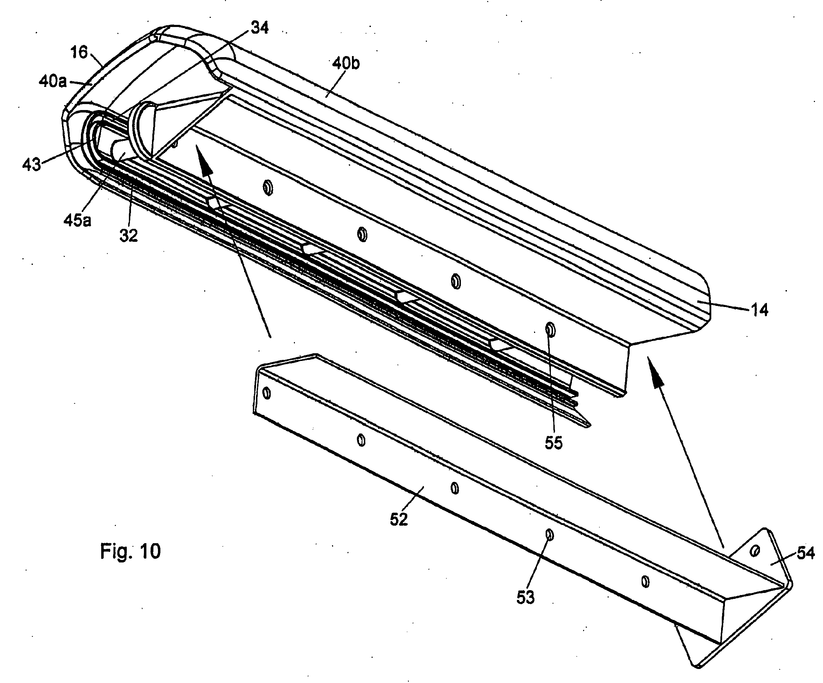

Fig. 1 shows in a partial side view a preferred embodiment of a transport system, generally designated as 10, according to the invention, which is intended for blister packages. The blister package transport system 10 has a boom 12 which has a mounting end 14 (Fig. 10) for mounting on a fixed structure (e.g., a vertical wall, not shown) and a free end 16 opposite thereto. Furthermore the blister package transport system 10 has a finite chain 18 formed from chain links 20. Shown in Fig. 2 as a detail is the chain 18 of the blister package transport system 10 of Fig. 1. Fig. 3 shows in a side view in Fig. 3a, in a perspective oblique view from above in Fig. 3b, and in a perspective oblique view from below in Fig. 3c a first preferred embodiment of a hook 22 of the blister package transport system 10. Each chain link 20 of the chain 18 is equipped with an integrally formed hook element 21 for the suspended transportation of a blister package 24. The arrangement of the blister packages 24 during the suspended transportation becomes apparent from Fig. 1 in which neither the boom 12 nor the blister packages 24 are shown in full length.

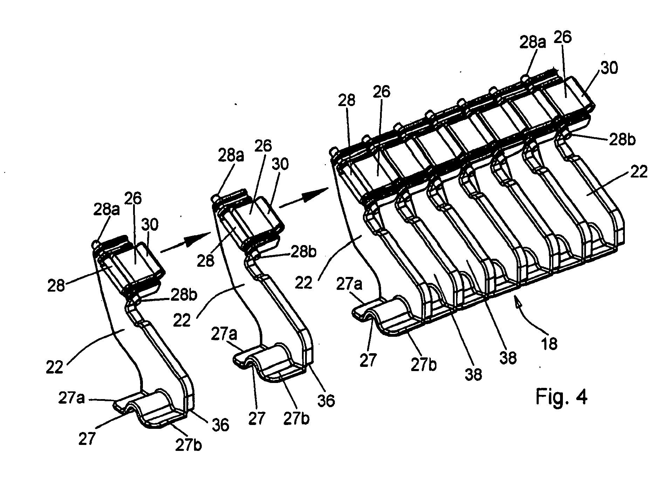

According to the representation of Figs. 3a-3c, each chain link 20 and its hook element 21 are constructed as a single-piece hook 22. Each hook 22 has on one end (e.g. situated top left in Fig. 3a) an integrally formed clip mounting portion 26 which can be clipped into the identically constructed clip mounting portions 26 of two neighboring hooks 22 in the manner shown in Fig. 4. In this way it is possible to assemble from identical hooks 22 the finite chain 18 which is shown as a detail in an overall view in Fig. 2.

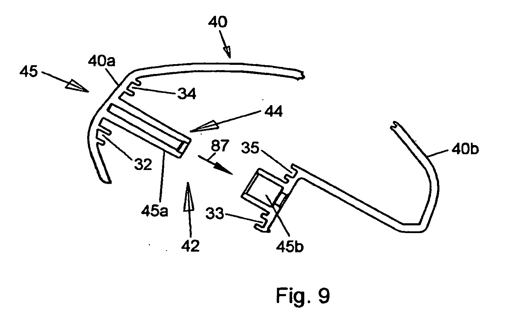

According to the representation of Fig. 3-4, each clip mounting portion 26 has a guide pin 28 and, parallel and complementary thereto, a slotted bushing 30 into which the guide pin 28 of a neighboring hook 22 can be clipped. Each guide pin 28 has at either end thereof protruding guide journals 28a, 28b to be received in guide grooves 32, 33 and 34, 35 in a casing 40 (Fig. 9) which will be described in more detail in the following. Each hook 22 has on its other end, that is, on its end opposite the clip mounting portion 26, a portion 27 which is cranked on one side for forming or completing the hook element 21. In the first preferred embodiment of the hook 22 herein described, the cranked portion 27 is integrally formed on a longitudinal bar of the hook element 21, which extends downwards from the clip mounting portion 26 in the representation of Fig. 3.

Conveniently, each hook 22 is formed from plastic in a single piece as an injection molded part. Formed on the cranked portion 27 are lateral webs 27a, 27b which serve to receive and stabilize the blister package 24 suspended upon the cranked portion 27 of the hook 22 in that they support the blister package within a Euro hole such that the blister package always hangs vertically and sideways shifting or crooked hanging of said package is prevented, as initially mentioned. A Euro hole (not shown) comprises in the preferred embodiment herein described a circular aperture which on both sides continues in two diametrically opposed narrower slits. The cranked portion 27 has in its middle a circularly arched part which is received in the circular aperture of the Euro hole, whereas the shoulders 27a, 27b adjoining the arched middle part extend into the slits adjoining the circular aperture on the sides. The Euro hole has at its upper edge a shape which is complementary to the upper edge of the cranked portion 27, thus enabling the desired stabilization of the blister package 24.

Each hook 22 has on its other end, that is, on its end opposite the clip mounting portion 26 on the side opposite its cranked portion 27, a recess 36 for receiving the free end of the cranked portion 27 of a neighboring hook 22, such that each two neighboring hooks 22 of the finite chain 18 form a closed compartment 38 (Figs. 2 and 4) for accommodating the upper end of a blister package 24, shown in Figs. 1, 2 and 4. As long as the compartment 38 is closed, it is assured that the blister package 24 cannot be removed. Removal is prevented by positive engagement of the two hooks 22 which form each compartment 38.

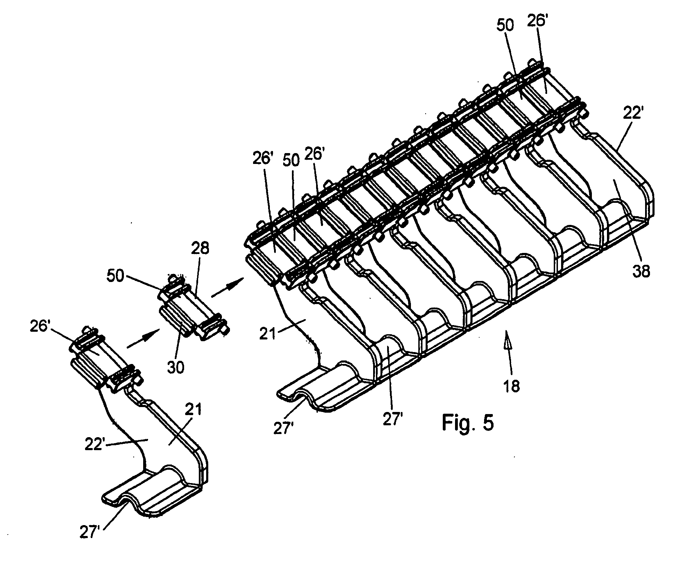

If the blister package transport system 10 shown in Fig. 1 is to handle blister packages 24 which are thicker than the blister packages shown in Fig. 1, allowance could be made for this in that not every compartment 38 accommodates the upper end of a blister package 24 but, for example, only every second or third compartment 38. This would result however in poor utilization of the capacity of the chain 18 because the chain would contain unused hooks 22. For handling thicker blister packages 24, it is more suitable to make use of a second preferred embodiment of hooks 22', which is shown in Fig. 5 in which like reference numbers are used for like parts as in Fig. 4.

A chain 18 with a larger pitch designed for thicker blister packages 24 requires not only hooks 22' with a longer cranked portion 27' but also the use of links 50. The reason for this will be explained in more detail further below. Each link 50 is constructed like a clip mounting portion 26'. The clip mounting portion 26' is constructed like the clip mounting portion 26 whose design was described in detail above. However, in the second preferred embodiment of the hook 22', which is shown in Fig. 5, a clip mounting portion 26' projects beyond the hook element 21 on the side on which the cranked portion 27' is situated. This becomes readily apparent from a comparison of the hook 22 shown in Fig. 4 on the left with the hook 22' shown in Fig. 5 on the left. The link 50 is constructed like the clip mounting portion 26', hence in the representation of Fig. 5 it has the slotted bushing 30 on the left and the guide pin 28 on the right. Otherwise the embodiment according to Fig. 5 corresponds to the embodiment of Fig. 4. One link 50 is clipped in between each two hooks 22' in their clip mounting portions 26'. The dimension of the link 50 in the longitudinal direction of the chain 18 is adapted to the dimension of the cranked portion 27' in the longitudinal direction of the chain 18, such that closed compartments 38 are formed by neighboring hooks 22' also in the embodiment of the chain according to Fig. 5. The hooks 22' with the long cranked portions 27' and the links 50 can be joined together to form a finite chain 18 just as simply as the hooks 22 with the short cranked portions 27.

In the following, the construction of the casing 40 and its co-action with the chain 18 will be described in more detail.

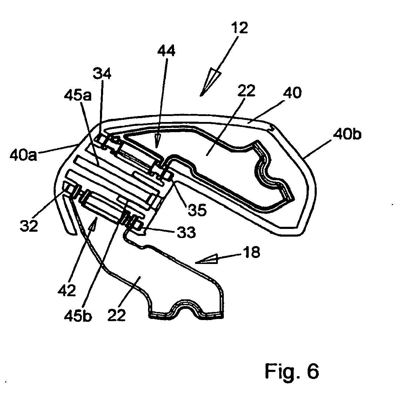

The boom 12 according to Fig. 1 is shown in Fig. 6 in a cross-sectional view. The boom 12 includes the casing 40 which is constructed as a hollow body open in downwards direction. Formed in the casing 40 in the region of the lower opening from which the chain 18 protrudes is a lower groove section 42 for the linear guidance of the chain 18 in the direction of the free end 16 (Fig. 1) of the boom 12. The lower groove section 42 comprises the two lower guide grooves 32 and 33. One of the two guide grooves 32, 33 can be omitted if the remaining guide groove is constructed as a channel with a C-shaped cross-section which has a narrow opening facing the inside of the casing 40. In this case, it would also be necessary for the assigned guide journal 28a or 28b to be constructed with a T-shaped cross-section for it to be guided in the remaining C groove such that the hooks 22 retain their orientation shown in Fig. 6. In this case, it would be more difficult however to guide the chain 18 slidingly in the shown orientation of the hooks 22 as easily and friction-free with one guide groove as with two guide grooves 32 and 33.

Adjoining the lower groove section 42 at the free end of the boom 12 is a turning point 43 (Fig. 10) of the chain 18 at which the blister packages 24 between neighboring hooks 22 are released because the hooks are separated from each other at the turning point 43 as becomes apparent from the representation of Figs. 1-2 on the left. The lower guide grooves 32, 33 are routed over the turning point 43 and continue in an upper groove section 44 in the upper guide grooves 34 and 35, respectively, which extend back in the direction of the mounting end 14 (Fig. 10) of the boom 12.

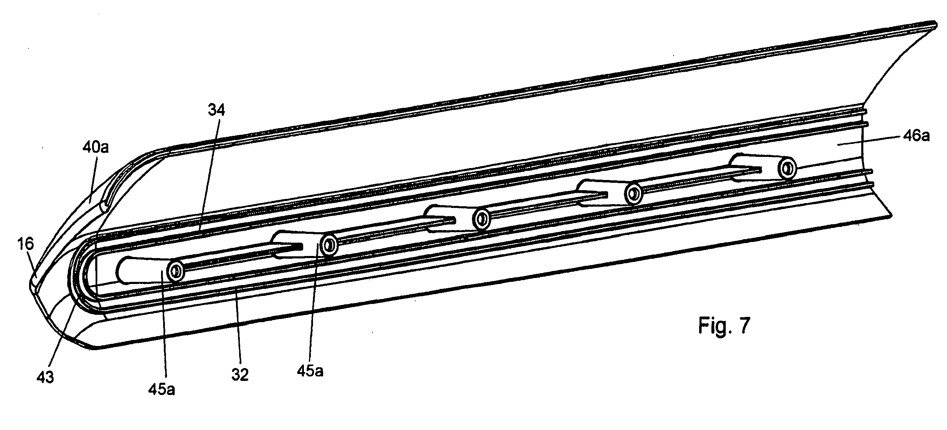

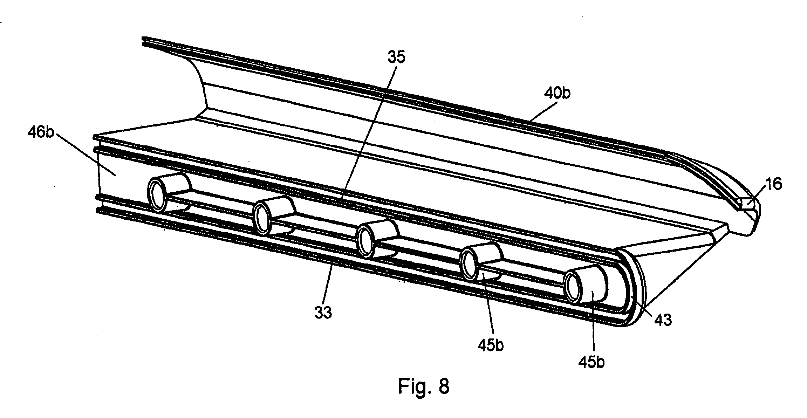

The casing 40 is split longitudinally and constructed of two shells 40a and 40b, as best shown in Figs. 6 and 9. The shells 40a, 40b of the casing 40 have means 45 for being plug-connected to each other. These means 45 comprise several pairs of pegs 45a and bushings 45b which, like the guide grooves 32, 34 and 33, 35 and the turning point 43, are formed on the inner side of opposed longitudinal walls 46a and 46b, respectively (Figs. 7-8), of the casing 40. The two casing shells 40a, 40b are moved during assembly into the position shown in Fig. 9 and plugged together in the direction of an arrow 87, whereby each peg 45a is inserted into the assigned bushing 45b and held clamped therein. As the result, the two casing shells 40a, 40b are in precisely mated relationship to each other. Following the assembly of the two casing shells 40a, 40b, the shells form a stable profile with mutually aligned guide grooves 32, 33 below and guide grooves 34, 35 above, in which the chain 18 is exactly orientated in the longitudinal and transverse directions. For the chain 18 there is therefore a lower, open channel for the advance movement of the chain 18 in the direction of an arrow 88 (Fig. 2) and an upper, closed channel for the return movement of the chain 18 in the direction of an arrow 89 (Fig. 2). The two casing shells 40a, 40b, which are manufactured preferably as injection molded parts, can be manufactured in different lengths by means of a variable-length injection mold.

The boom 12 has a supporting arm 52 (Fig.10) for supporting the casing 40, which supporting arm can be mounted on a vertical wall or the like. Fitted to one end of the supporting arm 52 is a mounting plate 54 with which the supporting arm 52 can be fastened to the wall. In the preferred embodiment shown, the supporting arm 52 is an angular section which is matingly received in a complementary recess in the bottom side of the casing 40 where it can be screw-connected to the casing 40, for which purpose bores 53 and 55, respectively, are provided.

The clip mounting portions 26, 26' of the hooks 22, 22' are arranged at an angle to the cranked portions 27, 27' of the hooks, as best shown in Figs. 3a-5. The guide groove pairs 32, 33 and 34, 35 have the same angle of inclination relative to the horizontal, as becomes apparent from Fig. 6. The casing 40 has a low overall height as the result, but nevertheless the cranked portions 27, 27' of the hooks 22, 22' are guided in a horizontal orientation.

The operation of the blister package transport system 10 is as follows: According to the representation of Figs. 4-5, a hook chain 18 is formed from hooks 20 with a short cranked portion 27 or from hooks 20' with a long cranked portion 27' and additional links 50. Clipping together the individual hooks without links 50 or the individual hooks 22' with links 50 produces a chain 18 which can be handled outside the casing 40 and can be assembled automatical and prefabricated as a module. During final assembly, the chain can be pushed simply from the mounting end 14 into the lower groove section 42 or the upper groove section 44 of the boom 12 before the boom 12 is mounted on the supporting arm 52. In this process, the prior assembled chain 18 is introduced with its guide journals 28a, 28b into the lower guide grooves 32, 33 or into the upper guide grooves 34, 35. Ultimately, the chain 18 extends from the mounting end 14 to approximately the middle of the turning point 43. It is assumed that it then finds itself in the upper groove section 44. The first or last compartment 38 of the chain 18 is then open in the region of the turning point 43 but one hook 22, for example, the hook 22 which in Fig. 2 above has passed the turning point 43, covers the inlet opening of the casing 40 in the upper area so that it is impossible for a hand to reach inside and manipulate, for example, an electronic device situated there (described further below). A blister package 24 is pushed onto the cranked portion 27 and the chain 18 is advanced by one pitch into the lower groove section 42. As soon as the next open compartment 38 arrives at the turning point 43, the next blister package 24 is hung in and the chain 18 advanced further, etc. This procedure is repeated until the maximum possible or desired number of blister packages 24 are suspended upon the chain 18, as is shown in Fig. 1. Owing to the special shape of the hooks 22, the blister packages 24 suspended from the chain 18 are held securely and can be individually removed only at the free end 16 of the boom 12, that is, from the front at the head of the blister package transport system 10. When the front-most blister package 24 is pulled out, the entire chain 18 is advanced by one pitch. As the result, the blister packages 24 suspended further to the rear move forwards in step with the removal until the chain is completely empty. This advancing movement of the chain by one blister package after another is indicated in Fig. 1 by an arrow 90 and in Fig. 2 by arrows 88, 86, and 89. An opening of the compartments 38 takes place only in the region of the turning point 43. Only here is a non-destructive removal of the blister packages 24 possible. If an attempt is made to remove more than one blister package 24 at a time, the blister package transport system 10 will be blocked mechanically, preventing any further movement of the chain 18. The opening of the compartments 38 in the region of the turning point 43 becomes apparent from Fig. 1 and even better so from Fig. 2.

The links 50, which are used when hooks 22' with the longer cranked portion 27' are used, are required because of the small curvature radius at the turning point 43 on account of the shallow casing 40. A chain link pitch of the chain 18 as large as the hook 22' with the long cranked portion 27' would require a larger curvature radius at the turning point 43 and hence a casing 40 with a larger overall height. As the result, the two casing shells 40a, 40b would be bigger, which could have an adverse effect on the looks of the blister package transport system 10. The hooks 22' with the long cranked portions 27' and the links 50 can be joined together to form the finite chain 18 just as simply as the hooks 22 with the short cranked portions 27 for which no links 50 are required. The links 50 compensate for the length difference from hook to hook without affecting the actual pitch of the chain 18 with regard to the small curvature radius at the turning point 43. When using the links 50, the chain 18 thus has the short pitch in the guide in the upper groove section 44 but the long pitch in the guide in the lower groove section 42. As the turning point of the free end of the cranked portion 27' does not change in relation to the short cranked portion 27, the hooks 22' with the long cranked portions 27' can also be deflected in the casing shells 40a, 40b whose dimensions orientate themselves by the chain 18 with the hooks 22 having short cranked portions 27.

The modular design of the blister package transport system 10 enables an electronic control board to be accommodated within the boom 12. The electronic equipment upgrades the normal mechanical functions into a practically intelligent blister package transport system. The electronic control board (not shown) could be accommodated between the lower groove section 42 and the upper groove section 44 in the casing 40, for example in a plane between the plug-in connection means 45. Furthermore, using a return run sensor accommodated in the proximity of the mounting end 14 in the casing 40, it would be a very simple matter to check when the blister package transport system 10 is nearly empty. This return run sensor would detect when the first hook 22 or 22' of the chain 18 arrives in the upper groove section 44 in the vicinity of the mounting end 14 and hence when the chain 18 is empty or nearly empty. The electronic version can also be constructed in a more intelligent form by placing a sales sensor in the region of the turning point 43 between the lower groove section 42 and the upper groove section 44. This sensor would monitor the continuous sales and signal them directly to a higher-level system. This would make it possible, for example, to draw up simultaneous inventories. Also it would be possible with the help of the sensors to perform a plausibility check in order to record deviations from customer purchasing behavior (theft). In this case an electronic control device could activate an electromechanical lock which blocks the blister package transport system 10 and prevents any further theft. Solely by virtue of its mechanical construction and modular design does the blister package transport system 10 guarantee a neat shelf profile. But with the previously described additional electronic control device the blister package transport system 10 can be expanded to include an intelligent merchandise sales control system. Furthermore, the blister package transport system 10 makes it superfluous to present merchandise in glass cases, automatic dispensing machines and the like and to package the products in addition in security boxes, thus providing consumers with direct access to a product and saving retailers the expense of an additional security box. In addition, the electronic device can be configured so that the removal of merchandise is possible only during business hours, meaning that the removal of merchandise outside shop opening times is blocked.

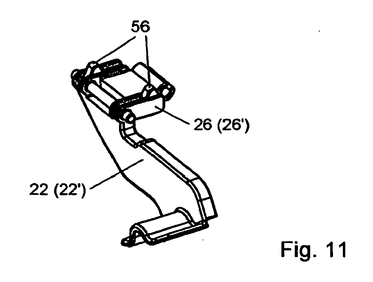

Fig. 11 shows a third preferred embodiment of the hook 22 or 22' in which the hook is equipped with two switching cams 56 for actuating a motion detector 57 (indicated in Fig. 2). The two switching cams 56 are integrally formed on the clip mounting portion 26 or 26' in spaced relation transverse to the longitudinal direction of the chain 18 and in offset relation in the longitudinal direction of the chain 18. With the switching cams 56 it is possible for two actuating arms of a motion detector 57 (one actuating arm thereof being indicated in Fig. 2 by a dashed line) to be actuated, as a result of which certain control combinations result, depending, for example, on the direction of movement of the chain 18, with which certain states of the chain 18 can be detected, for example its advancing or return movement, the end of the chain, etc. In Fig. 2 only one switching cam 56 is indicated, but it will be understood, of course, that each hook 22 or 22' of a chain is equipped with at least one and preferably two such switching cams 56. Conveniently, the links 50 can also be equipped with at least one switching cam 56. The combination of switching cam 56 and motion detector 57 can be used alone or in combination with the above described electronic control device.

Although a blister package transport system is described with reference to the accompanying Figs. 1-11 as a preferred embodiment of the transport system according to the invention, it will be understood that the transport system is suitable not only for blister packages but for all types of merchandise which can be suspended from the hooks 22 or 22' of the chain 18.

### List of Reference Numbers

- 10: blister package transport system
- 12: boom
- 14: mounting end
- 16: free end
- 18: chain
- 20: chain link
- 21: hook element
- 22, 22': hook
- 24: blister package
- 26, 26': clip mounting portion
- 27: short cranked portion
- 27': long cranked portion
- 27a,: 27b lateral webs
- 28: guide pin
- 28a, 28b: guide journal
- 30: slotted bushing
- 32: lower guide groove
- 33: lower guide groove
- 34: upper guide groove
- 35: upper guide groove
- 36: recess
- 38: compartment
- 40: casing
- 40a, 40b: shells
- 42: lower groove section
- 43: turning point
- 44: upper groove section
- 45: plug-in connection means
- 45a: peg
- 45b: bushing
- 46a,: 46b longitudinal walls
- 50: link
- 52: supporting arm
- 53: bore
- 54: mounting plate
- 55: bore
- 56: switching cam
- 57: motion detector
- 86-90: arrows

While the invention has been described in detail and with reference to specific examples thereof, it will be apparent to one skilled in the art that various changes and modifications can be made therein without departing from the scope of the appended claims.

## Claims

1. A transport system (10) for blister packages (24) or the like, said system comprising:
a chain (18) comprising chain links (20), each of which are constructed as a hook (22, 22') for suspending a blister package (24) or the like thereon;
a boom (12) having a mounting end (14) for mounting on a fixed structure and having a free end (16) opposite thereto, said boom (12) comprising an upper groove section (44) and a lower groove section (42), said lower groove section (42) supporting movement of said chain (18) towards said free end (16) of said boom (12) and a chain turning point (43), formed at said free end (16), and said upper groove section (44) supporting movement of said chain (18) away from said turning point (43) towards said mounting end (14); wherein a single blister package (24) or the like is removable from its corresponding hook (22, 22') only at said turning point (43),
**characterized in that** the chain is manually manipulatable, by a customer, and new blister packages (24) or the like are manually advanced into the lower groove section (42).

2. The transport system according to claim 1 wherein said boom (12) comprises a casing (40) formed as a hollow body open in a downward direction and wherein said casing (40) comprises an inner side including lower guide grooves (32, 33) corresponding to said lower groove section (42) and upper guide grooves (34, 35) corresponding to said upper groove section (44).

3. The transport system according to claim 2 wherein said casing (40) is split longitudinally, forming two shells (40a, 40b).

4. The transport system according to claim 3 wherein said shells (40a, 40b) of said casing (40) comprise means (45) for a mutual plug-in connection.

5. The transport system according to claim 2 wherein said boom (12) includes a supporting arm (52) mountable on the fixed structure, for supporting the casing (40).

6. The transport system according to claim 2 wherein each chain link (20) and its hook element (21) are constructed as a single-piece hook.

7. The transport system according to claim 6 wherein each hook (22) has on one end a clip mounting portion (26) adapted to be clipped into clip mounting portions (26) of two neighboring hooks (22').

8. The transport system according to claim 7 wherein each clip mounting portion (22) has a guide pin (28) and, parallel and complementary thereto, a slotted bushing (30) into which said guide pin (28) of a neighboring hook (22') can be clipped.

9. The transport system according to claim 8 wherein each guide pin (28) has at either end protruding guide journals (28a, 28b) for being received in respective guide grooves (32 - 35).

10. The transport system according to claim 7 wherein each hook (22) comprises a portion (27, 27') cranked on one side.

11. The transport system according to claim 10 wherein lateral webs (27a, 27b) are formed on said cranked portion (27, 27').

12. The transport system according to claim 10 wherein each hook (22) has at an upper end on a side opposite its cranked portion (27) a recess (36) for receiving the free end of said cranked portion (27') of a neighboring hook (22'), wherein each two neighboring hooks (22, 22') of said finite chain (18) are able to form in combination a closed compartment (38) for accommodating an upper end of a blister package (24) or the like.

13. The transport system according to claim 9 wherein said hooks (22, 22') are guided at an angle through said guide grooves (32 - 35) and that on each hook (22, 22') said clip mounting portions (26, 26') are set at a corresponding angle relative to said cranked portion (27, 27').

14. The transport system according to claim 7 further comprising separate links each of which are constructed like every clip mounting portion (26, 26').

15. The transport system according to claim 1 wherein each hook (22, 22') is equipped with at least one switching cam (56) for actuating a motion detector (57).

## Patentansprüche

1. Transportsystem (10) für Blisterpackungen (24) od. dgl., wobei das System umfasst:
eine Kette (18), die Kettenglieder (20) umfasst, die jeweils als ein Haken (22, 22') ausgebildet sind, an welchem eine Blisterpackung (24) od. dgl. aufgehängt werden kann;
einen Ausleger (12), der ein Anschlussende (14) zur Befestigung an einem festen Gebilde und entgegengesetzt dazu ein freies Ende (16) hat, wobei der Ausleger (12) einen oberen Nutabschnitt (44) und einen unteren Nutabschnitt (42) umfasst, wobei der untere Nutabschnitt (42) eine Bewegung der Kette (18) zu dem freien Ende (16) des Auslegers (12) ermöglicht, und einer Kettenumlenkstelle (43), die an dem freien Ende (16) gebildet ist, wobei der obere Nutabschnitt (44) eine Bewegung der Kette (18) weg von der Umlenkstelle (43) hin zu dem Anschlussende (14) ermöglicht; wobei eine einzelne Blisterpackung (24) od. dgl. von ihrem Haken (22, 22') nur an der Umlenkstelle (43) abnehmbar ist,
**dadurch gekennzeichnet, dass** die Kette durch einen Kunden manuell handhabbar ist und dass neue Blisterpackungen (24) od. dgl. manuell in den unteren Nutabschnitt (42) bewegt werden.

2. Transportsystem nach Anspruch 1, wobei der Ausleger (12) ein Gehäuse (40) aufweist, das als ein nach unten hin offener Hohlkörper ausgebildet ist, und wobei das Gehäuse (40) eine Innenseite aufweist, welche untere Führungsnuten (32, 33) entsprechend dem unteren Nutabschnitt (42) und obere Führungsnuten (34, 35) entsprechend dem oberen Nutabschnitt (44) umfasst.

3. Transportsystem nach Anspruch 2, wobei das Gehäuse (40) längs geteilt und in zwei Schalen (40a, 40b) ausgebildet ist.

4. Transportsystem nach Anspruch 3, wobei die Schalen (40a, 40b) des Gehäuses (40) Mittel (45) für eine gegenseitige Steckverbindung aufweisen.

5. Transportsystem nach Anspruch 2, wobei der Ausleger (12) einen an dem festen Gebilde befestigbaren Tragarm (52) zum Tragen des Gehäuses (40) aufweist.

6. Transportsystem nach Anspruch 2, wobei jedes Kettenglied (20) und dessen Hakenelement (21) als ein einstückiger Haken ausgebildet sind.

7. Transportsystem nach Anspruch 6, wobei jeder Haken (22) an einem Ende ein Clipanschlussteil (26) hat, der in die Clipanschlussteile (26) von zwei benachbarten Haken (22') einclipsbar ist.

8. Transportsystem nach Anspruch 7, wobei jeder Clipanschlussteil (22) einen Führungsbolzen (28) und eine zu diesem parallele und komplementäre Schlitzbuchse (30) aufweist, in die der Führungsbolzen (28) eines benachbarten Hakens (22') einclipsbar ist.

9. Transportsystem nach Anspruch 8, wobei jeder Führungsbolzen (28) beidseitig an seinen Enden überstehende Führungszapfen (28a; 28b) zur Aufnahme in den Führungsnuten (32 - 35) hat.

10. Transportsystem nach Anspruch 7, wobei jeder Haken (22) einen einseitig gekröpft ausgebildeten Teil (27, 27') hat.

11. Transportsystem nach Anspruch 10, wobei an dem gekröpften Teil (27, 27') seitliche Stege (27a, 27b) ausgebildet sind.

12. Transportsystem nach Anspruch 10, wobei jeder Haken (22) an einem oberen Ende auf seiner zu seinem gekröpften Teil (27) entgegengesetzten Seite eine Ausnehmung (36) zur Aufnahme des freien Endes des gekröpften Teils (27') eines benachbarten Hakens (22') aufweist, so dass jeweils zwei benachbarte Haken (22, 22') der endlichen Kette (18) in Kombination eine geschlossene Kammer (38) zur Aufnahme eines oberen Endes einer Blisterpackung (24) od. dgl. bilden können.

13. Transportsystem nach Anspruch 9, wobei die Haken (22, 22') durch die Führungsnuten (32 - 35) unter einem Winkel geführt sind und dass an jedem Haken (22, 22') die Clipanschlussteile (26, 26') gegenüber dem gekröpften Teil (27, 27') unter einem entsprechenden Winkel angeordnet sind.

14. Transportsystem nach Anspruch 7, weiter mit gesonderten Zwischenstücken, von denen jedes wie jeder Clipanschlussteil (26, 26') ausgebildet ist.

15. Transportsystem nach Anspruch 1, wobei jeder Haken (22, 22') mit wenigstens einem Schaltnocken (56) zum Betätigen eines Bewegungsdetektors (57) versehen ist.

## Revendications

1. Système de transport (10) pour des emballages thermoformés (24) ou similaires, ledit dispositif comprenant :
une chaîne (18) comprenant des maillons de chaîne (20), dont chacun est construit comme un crochet (22, 22') pour suspendre un emballage thermoformé (24) ou similaire sur ce dernier ;
une flèche (12) ayant une extrémité de montage (14) destinée à être montée sur une structure fixe et ayant une extrémité libre (16) opposée à celle-ci, ladite flèche (12) comprenant une section de rainure supérieure (44) et une section de rainure inférieure (42), ladite section de rainure inférieure (42) supportant le mouvement de ladite chaîne (18) vers ladite extrémité libre (16) de ladite flèche (12) et un point de rotation de chaîne (43) formé au niveau de ladite extrémité libre (16) et ladite section de rainure supérieure (44) supportant le mouvement de ladite chaîne (18) à distance dudit point de rotation (43) vers ladite extrémité de montage (14) ; dans lequel un seul emballage thermoformé (24) ou similaire peut être retiré de son crochet (22, 22') correspondant uniquement au niveau dudit point de rotation (43),
**caractérisé en ce que** la chaîne peut être manipulée manuellement, par un client, et on fait avancer manuellement de nouveaux emballages thermoformés (24) ou similaires dans la section de rainure inférieure (42).

2. Système de transport selon la revendication 1, dans lequel ladite flèche (12) comprend un boîtier (40) formé comme un corps creux ouvert dans une direction descendante et dans lequel ledit boîtier (40) comprend un côté interne comprenant des rainures de guidage inférieures (32, 33) correspondant à ladite section de rainure inférieure (42) et des rainures de guidage supérieures (34, 35) correspondant à ladite section de rainure supérieure (44).

3. Système de transport selon la revendication 2, dans lequel ledit boîtier (40) est fendu longitudinalement, formant deux coques (40a, 40b).

4. Système de transport selon la revendication 3, dans lequel lesdites coques (40a, 40b) dudit boîtier (40) comprennent des moyens (45) pour un raccordement de branchement mutuel.

5. Système de transport selon la revendication 2, dans lequel ladite flèche (12) comprend un bras de support (52) pouvant être monté sur la structure fixe afin de supporter le boîtier (40).

6. Système de transport selon la revendication 2, dans lequel chaque maillon de chaîne (20) et son élément de crochet (21) sont construits sous la forme d'un crochet d'un seul tenant.

7. Système de transport selon la revendication 6, dans lequel chaque crochet (22) a, sur une extrémité, une partie de montage d'attache (26) adaptée pour être attachée dans les parties de montage d'attache (26) des deux crochets voisins (22').

8. Système de transport selon la revendication 7, dans lequel chaque partie de montage d'attache (22) a une broche de guidage (28) et, parallèle et complémentaire à cette dernière, une douille fendue (30) dans laquelle ladite broche de guidage (28) d'un crochet (22') voisin peut être attachée.

9. Système de transport selon la revendication 8, dans lequel chaque broche de guidage (28) a, au niveau de chaque extrémité, des tourillons de guidage en saillie (28a, 28b) destinés à être reçus dans des rainures de guidage (32-35) respectives.

10. Système de transport selon la revendication 7, dans lequel chaque crochet (22) comprend une partie (27, 27') coudée d'un côté.

11. Système de transport selon la revendication 10, dans lequel des âmes latérales (27a, 27b) sont formées sur ladite partie coudée (27, 27').

12. Système de transport selon la revendication 10, dans lequel chaque crochet (22) a, au niveau de son extrémité supérieure, sur un côté opposé à sa partie coudée (27), un évidement (36) pour recevoir l'extrémité libre de ladite partie coudée (27') d'un crochet (22') voisin, dans lequel chacun des deux crochets (22, 22') voisins de ladite chaîne limitée (18), peut former, en combinaison, un compartiment fermé (38) pour loger une extrémité supérieure d'un emballage thermoformé (24) ou similaire.

13. Système de transport selon la revendication 9, dans lequel lesdits crochets (22, 22') sont guidés selon un angle à travers lesdites rainures de guidage (32-35) et de sorte que sur chaque crochet (22, 22'), lesdites parties de montage d'attache (26, 26') sont placées selon un angle correspondant par rapport à ladite partie coudée (27, 27').

14. Système de transport selon la revendication 7, comprenant en outre des maillons séparés, dont chacun est construit comme chaque partie de montage d'attache (26, 26').

15. Système de transport selon la revendication 1, dans lequel chaque crochet (22, 22') est équipé avec au moins une came de commutation (56) pour actionner un détecteur de mouvement (57).
